# EUROPEAN PATENT APPLICATION

(11) **EP 1 186 846 A1**
(43) Date of publication of application: **13.03.2002**
(21) Application number: 00927798.9
(22) Date of filing: 17.05.2000
(51) Int. Cl.: F28F 9/013, F16J 15/06

(54) **BUSH FOR PARTITION-THROUGH-PIPE SEAL AND MULTI-STAGE FLASH EVAPORATOR USING THE BUSH**

(30) Priority: 18.05.1999 JP 13660099
(71) Applicant: Hitachi Zosen Corporation, Osaka-shi, Osaka 559-8559 (JP)
(72) Inventor: HIRAO, Teizo, Hitachi Zosen Corporation, Osaka-shi, Osaka 559-8559 (JP); IMABAYASHI, Kazuhiro, Hitachi Zosen Corporation, Osaka-shi, Osaka 559-8559 (JP); TANIGUCHI, Masaki, Hitachi Zosen Corporation, Osaka-shi, Osaka 559-8559 (JP); TAKANABE, Kouji, Hitachi Zosen Corporation, Osaka-shi, Osaka 559-8559 (JP); OTSUKA, Hiroyuki, Hitachi Zosen Corporation, Osaka-shi, Osaka 559-8559 (JP)
(74) Representative: Paul, Dieter-Alfred, Dipl.-Ing.
(86) International application number: JP0003172
(87) International publication number: WO0070290

(57) **Abstract**

A sealing bush for a tube inserted through a hole in a partition is made of Teflon and comprises a cylindrical body 21 having an inner periphery with a diameter greater than the outside diameter of the tube 5a, an outer periphery with a diameter smaller than the diameter of the hole 7a and a front-to-rear length greater than the depth of the hole 7a, an inner seal portion 22 fittable around the tube 5a in intimate contact therewith, an outer seal portion 23 fittable to an inner peripheral surface of the partition defining the hole 7a in intimate contact with the surface, an engaging portion 24 forcibly movable through the hole 7a and engageable with a front edge of the hole-defining inner peripheral surface of the partition after being moved through the hole for preventing the bush from reversely slipping out of the hole, and a retaining portion 25 movable into contact with a rear edge of the hole-defining inner peripheral surface of the partition after the engaging portion 24 is forcibly moved through the hole 7a for preventing the bush from moving through the hole.

## Description

### TECHNICAL FIELD

The present invention relates to sealing bushes, for example, for use in causing condensation tubes to extend through a plurality of evaporation chambers divided by a plurality of partitions and each to be maintained at a predetermined pressure, for sealing off a clearance in each of through holes formed in the partition around the condensation tube inserted through the hole, and to multi-flash evaporators incorporating such bushes.

### BACKGROUND ART

Evaporators are already well known which comprise a plurality of evaporation chambers separated from one another by a partition and each to be maintained at a predetermined pressure, and a bundle of condensation tubes inserted through respective holes in the partition to extend through all the evaporation chambers. A clearance in each of the holes in the partition around the condensation tube inserted therethrough is conventionally sealed off by forming an annular groove of larger diameter than the hole in an edge portion of the partition defining the hole, fitting a metal ring into the annular groove and forcibly inserting the condensation tube through the ring.

The conventional seal thus formed has the problem of necessitating much time and labor for forming the annular groove and the problem of corrosion of the metal ring used. Another problem is also encountered in that the ring will slip off or will remain fixed to the condensation tube when the tube is to be replaced.

An object of the present invention is to provide a bush for sealing a clearance in a through hole in a partition around a tube inserted through the hole, by which the clearance can be sealed off with reduced time and labor less costly without the likelihood of corrosion while rendering the tube replaceable easily without permitting the bush to slip off or to become fixed to the tube.

Another object of the present invention is to provide a multi-flash evaporator having incorporated therein such sealing bushes for tubes inserted through partitions.

### DISCLOSURE OF THE INVENTION

The present invention provides a sealing bush for a tube inserted through a hole formed in a partition for sealing a clearance in the hole around the tube, the sealing bush comprising a cylindrical body having an inner periphery with a diameter greater than the outside diameter of the tube, an outer periphery with a diameter smaller than the diameter of the hole and a front-to-rear length greater than the depth of the hole, an inner seal portion formed on the inner periphery of the body and fittable around the tube in intimate contact therewith, an outer seal portion formed on the outer periphery of the body and fittable to an inner peripheral surface of the partition defining the hole in intimate contact with the surface, an engaging portion formed on the outer periphery of the body at a front end thereof and projecting radially outwardly of the body for preventing the bush from reversely slipping out of the hole, the engaging portion being forcibly movable through the hole and engageable with a front edge of the hole-defining inner peripheral surface of the partition after being moved through the hole, and a retaining portion formed on the outer periphery of the body at a rear end thereof and projecting radially outwardly of the body, the retaining portion being movable into contact with a rear edge of the hole-defining inner peripheral surface of the partition after the engaging portion is forcibly moved through the hole to prevent the bush from moving through the hole.

When fitted into the hole formed in the partition, the sealing bush of the invention is fixed in position. When the tube is then merely inserted through the bush, a clearance in the hole of the partition around the tube inserted through the hole can be sealed. The bush therefore eliminates the need for the time-consuming costly procedure of making the annular groove, ensuring a sealing effect by the inner seal portion and the outer seal portion. The engaging portion and the retaining portion further prevent the bush from slipping off the partition or becoming fixed to the tube, consequently assuring facilitated replacement of the tube.

Preferably, the front end of the body is formed with slits extending longitudinally thereof for permitting the engaging portion to move through the hole easily.

More preferably, the engaging portion is shaped in the form of a rectangular triangle having a small angle at a front end thereof in longitudinal section.

Further preferably, the bush is made of a nonmetallic material such as Teflon. Teflon (PTFE) has corrosion resistance over a wide temperature range, overcoming the problem of corrosion to be encountered with the use of the metal ring.

The preferred apparatus having such bushes incorporated therein include, for example, a multi-flash evaporator which comprises a multiplicity of housings elongated from front rearward and arranged side by side from left rightward, the housings having a pressure successively reducing from housing to housing from the left rightward, a bundle of condensation tubes provided in a widthwise central portion of each of the housings at an upper part thereof and extending longitudinally of the housing, a gutterlike condensate receptacle disposed below the tube bundle for receiving a condensate from the tube bundle, an evaporation chamber central partition positioned between a widthwise midportion of a bottom wall of the condensate receptacle and a widthwise midportion of a bottom wall of the housing and extending longitudinally of the housing for forming left and right evaporation stages in a lower portion of the housing, a condensation chamber central partition disposed at a lengthwise midportion of the tube bundle and having the condensation tubes inserted therethrough, a condensation chamber left front-half partition extending from an upper edge of a left side wall of the condensate receptacle to a widthwise midportion of a top wall of the housing around a front half of the tube bundle and covering an outer periphery of the front half of the tube bundle at a left side thereof for permitting vapor produced in the left evaporation stage to flow into the tube bundle only at a rear half thereof, and a condensation chamber right rear-half partition extending from an upper edge of a right side wall of the condensate receptacle to the widthwise midportion of the top wall of the housing around the rear half of the tube bundle and covering an outer periphery of the rear half of the tube bundle at a right side thereof for permitting vapor produced in the right evaporation stage to flow into the tube bundle only at the front half thereof, so that sea water admitted into the housing at the left end is caused to flow into all the other housings successively through orifices and flashed for desalination, the condensation chamber central partition being formed with holes having a diameter greater than the outside diameter of the condensation tubes, the sealing bush described above being fitted in each of the holes around the condensation tube inserted through the hole.

Since the multi-flash evaporator for desalinating sea water has the likelihood of corrosion with vapor, metal seals are not suited to use in the evaporator, while the chambers separated by a partition are small in pressure difference therebetween, and the internal pressure of the chambers is as low as up to 1 atom. Accordingly the sealing bush described above is suitable for use in the multi-flash evaporator for the tubes inserted through the partition.

### BRIEF DESCRIPTION OF THE DRAWINGS

FIG. 1 is a fragmentary perspective view showing a multi-flash evaporator provided with sealing bushes of the invention for tubes inserted through a partition.

FIG. 2 is an enlarged view in cross section showing the front half of the evaporator of FIG. 1.

FIG. 3 is an enlarged view in cross section of the rear half of the same.

FIG. 4 is a perspective view showing a first embodiment of sealing bush of the invention for the partition-inserted tube.

FIG. 5 is a view in longitudinal section of the same.

FIG. 6 is an enlarged view in longitudinal section of the same.

FIG. 7 is a perspective view showing a second embodiment of sealing bush of the invention for the partition-inserted tube.

FIG. 8 is a view in longitudinal section of the same.

FIG. 9 is an enlarged view in longitudinal section of the same.

FIG. 10 is a perspective view showing a third embodiment of sealing bush of the invention for the partition-inserted tube.

FIG. 11 is a view in longitudinal section of the same.

FIG. 12 is an enlarged view in longitudinal section of the same.

### BEST MODE FOR CARRYING OUT THE INVENTION

Embodiments of the invention will be described below with reference to the drawings.

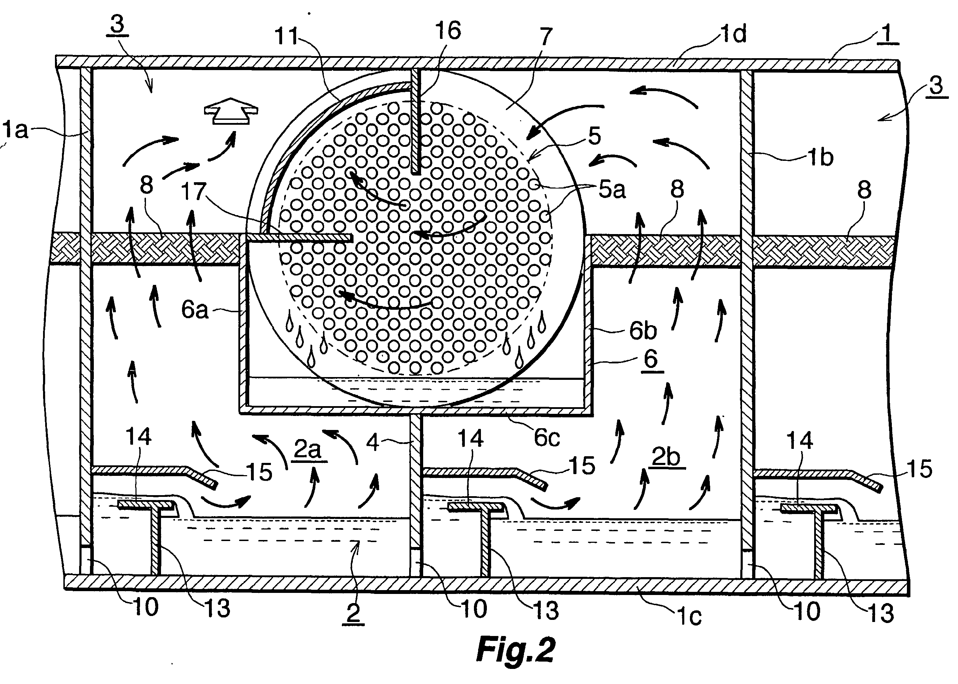

The terms "front," "rear," "left" and "right" used herein are based on FIG. 2; the term "front" refers to the front side of the plane of the drawing, the term "rear" to the rear side thereof, and the terms "left" and "right" refer respectively to the left-hand side and right-hand side of the drawing. These terms are used for the sake of convenience, and the illustrated device may be used as positioned in reverse relation to the illustration with respect to the longitudinal or lateral direction.

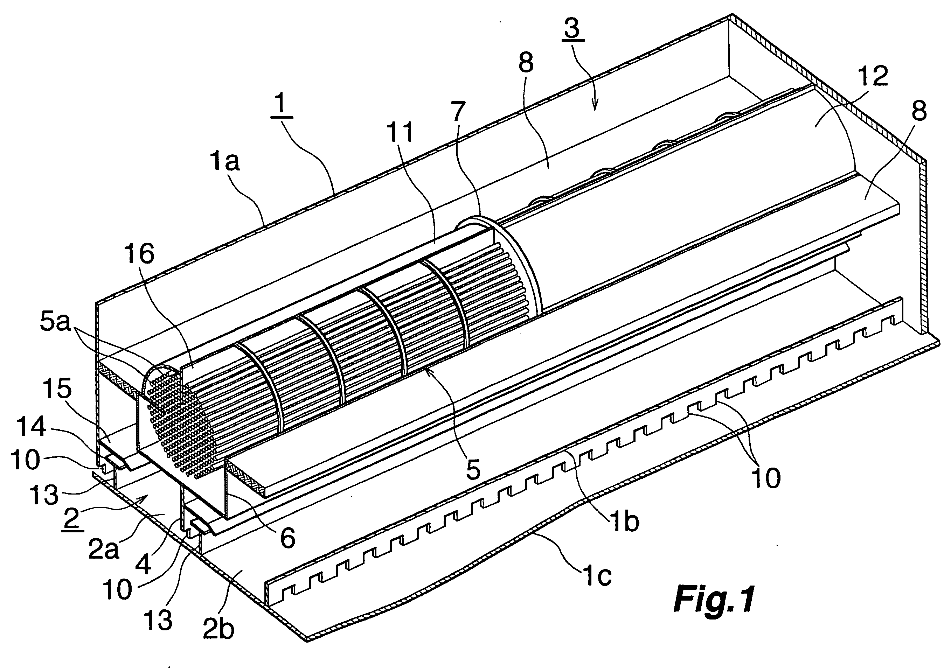

FIGS. 1 to 3 show part of a multi-flash evaporator which is desirable for use with sealing bushes of the invention for the tubes extending through a partition.

The illustrated multi-flash evaporator is adapted for use in the desalination of sea water and has a large number of housings 1 which are elongated in the front-to-rear direction and arranged side by side from the left rightward. Each housing 1 has a lower portion serving as an evaporation chamber 2, and an upper portion as a condensation chamber 3.

The evaporation chamber 2 is divided into a left (high-temperature) evaporation stage 2a and a right (low-temperature) evaporation stage 2b by an evaporation chamber central partition 4 extending longitudinally of the housing and positioned between the widthwise midportion of bottom wall 6c of a condensate receptacle 6 and the widthwise midportion of bottom wall 1c of the housing 1. A multiplicity of orifices 10 for causing sea water (heated brine) to flow in therethrough are formed in each of the lower edge portion of left side wall 1a of the housing 1 and the lower edge portion of the central partition 4. Although not shown, the housing 1 at the right end is connected to a vacuum pump for suction. The sea water introduced into the housing 1 at the left end is caused to flow downstream through the orifices 10, whereby the evaporation stages 2a, 2b of each housing 1 are maintained at a pressure reducing by a small decrement (corresponding to a temperature decrement of 2° C) as the water flows from the left rightward.

Provided downstream from the orifices 10 is an underwater barrier 13 having a horizontal wall 14 at its upper end. Disposed horizontally above the barrier 13 is a baffle 15 for preventing a splash of the brine.
The sea water flowing into the housing 1 passes over the underwater barrier 13, whereby the vaporization thereof is promoted, while drops of bumping water are prevented from ingressing into the condensation chamber 3 by the baffle 15.

The condensation chamber 3 is provided with a bundle 5 of condensation tubes which is circular in vertical section and extends longitudinally of the housing 1 at an upper part of widthwise central portion thereof. Disposed below the tube bundle 5 is a gutterlike condensate receptacle 6 for receiving the liquid produced by condensation on the outer peripheral surfaces of the condensation tubes 5a. A demister (mesh) 8 for catching water droplets entrained in vapor is provided horizontally between the upper end of left side wall 6a of the condensate receptacle 6 and the left side wall 1a of the housing 1 and between the upper edge of right side wall 6b of the receptacle 6 and the right side wall 1 of the housing 1.

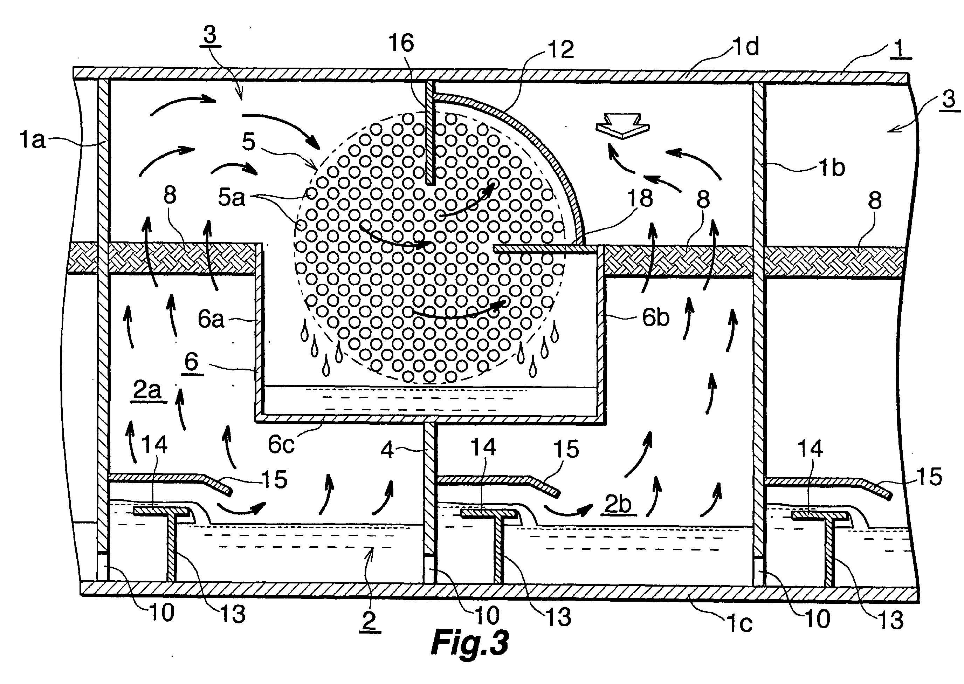

With reference to FIGS. 2 and 3, the condensation chamber 3 is divided by a central partition 7 positioned at the lengthwise midportion of the tube bundle 5 and having the condensation tube 5a inserted therethrough, a left front-half partition 11 extending from the upper edge of left side wall 6a of the receptacle 6 to the widthwise midportion of top wall 1d of the housing around the front half of the tube bundle 5 and in the form of a circular-arc (corresponding to a quarter of the circumference) in cross section to cover the outer periphery of front half of the tube bundle 5 at the left side thereof, and a right rear-half partition 12 extending from the upper edge of right side wall 6b of the receptacle 6 to the widthwise midportion of top wall 1d of the housing around the rear half of the tube bundle 5 and in the form of a circular-arc, similar to the above, in cross section to cover the outer periphery of rear half of the tube bundle 5 at the right side thereof. The provision of these three partitions 7, 11, 12 permits the vapor produced in the left evaporation stage 2a to flow into the tube bundle 5 only at the rear half thereof, and the vapor produced in the right evaporation stage 2b to flow only into the front half of the tube bundle 5.

The condensation chamber 3 is further provided with a vertical central baffle plate 16 extending through the center of interior upper portion of the tube bundle 5 over the entire length thereof, a horizontal left fronthalf baffle plate 17 provided in the front-half of interior portion of the tube bundle 5 at the left of its center, and a horizontal right rear-half baffle plate 18 provided in the rear-half of interior portion of the tube bundle 5 at the right of its center. The vertical central baffle plate 16 has an upper edge joined to the housing top wall 1d, the horizontal left front-half baffle plate 17 has a left edge joined to the upper edge of the receptacle left side wall 6a, and the horizontal right rear-half baffle plate 18 has a right edge joined to the upper edge of the receptacle right side wall 6b. The left front-half partition 11 is held between the portion of the central baffle plate 16 close to its upper edge and the portion of the left front-half baffle plate 17 close to its left edge. The right rear-half partition 12 is held between the portion of the central baffle plate 16 close to its upper edge and the portion of the right rear-half baffle plate 18 close to its right edge.

With the multi-flash evaporator described, sea water is admitted into all the housings 1 successively through the orifices 10, whereby the sea water flowing in over the underwater barriers 13 into the respective evaporation stages 2a, 2b of each housing 1 is allowed to flash. The resulting water vapor having fine salt-containing water droplets entrained therein passes through the demister 8 and is separated from the fine water droplets in the meantime. The water vapor in the left evaporation stage 2a flows into the condensation tube bundle 5 at its rear half and is thereby converted into a water condensate on cooling, while the water vapor in the right evaporation stage 2b flows into the front half of the tube bundle 5 and is thereby condensed to water on cooling.

With the multi-flash evaporator, a clearance in each of through holes 7a formed in the central partition 7 of the condensation chamber, around the condensation tube 5a inserted through the hole is sealed with a bush 20, 30 or 40 of Teflon (PTFE) as will be described in detail below.

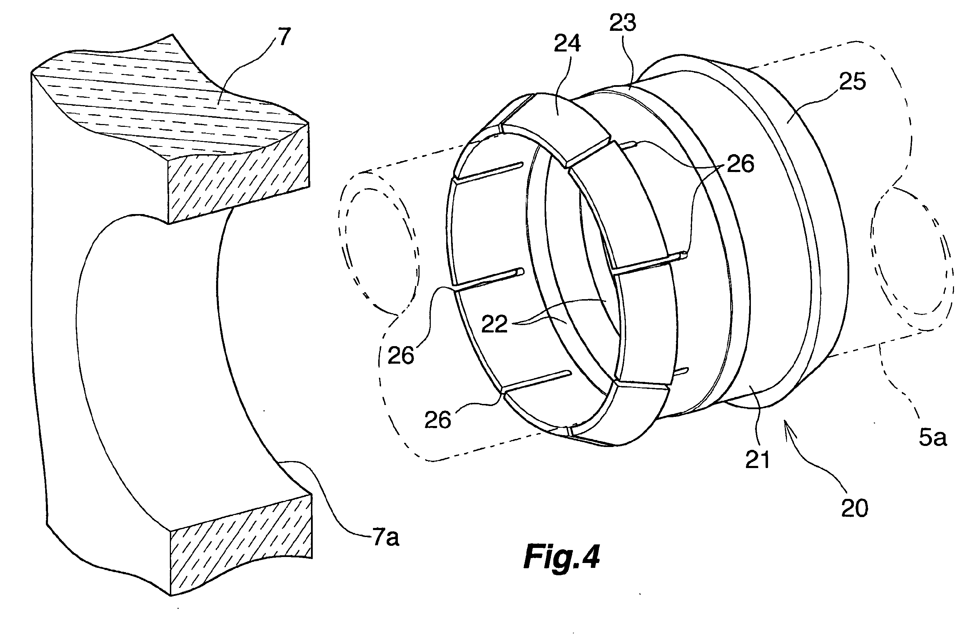

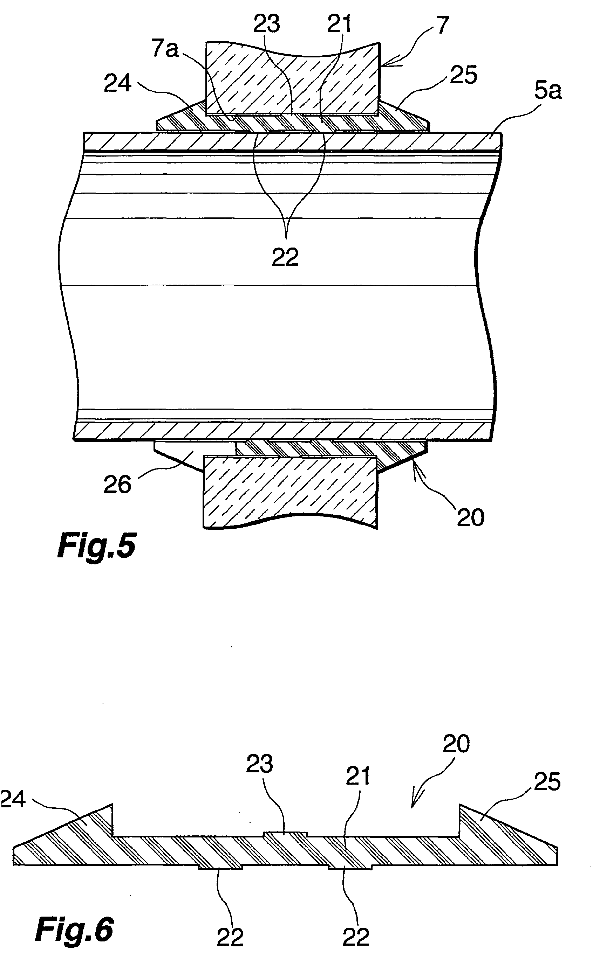

FIGS. 4 to 6 show a first embodiment of sealing bush for the tube extending through the partition. As shown in these drawings, the sealing bush 20 of the first embodiment comprises a cylindrical body 21, inner seal portions 22 formed on the inner peripheral surface of the body 21 respectively at opposite sides of the lengthwise midportion thereof and fittable around the condensation tube 5a in intimate contact therewith, an outer seal portion 23 formed on the outer peripheral surface of the body 21 at the lengthwise midportion thereof and fittable to the inner peripheral surface of the partition 7 defining the through hole 7a in intimate contact therewith, an engaging portion 24 formed on the outer peripheral surface of the body 21 at its front end and projecting radially outwardly of the body for preventing the bush from reversely slipping out of the hole 7a, the engaging portion 24 being forcibly movable through the through hole 7a and engageable with the front edge of the hole-defining inner peripheral surface of the partition 7 after being moved through the hole, and a retaining portion 25 formed on the outer peripheral surface of the body 21 at its rear end and projecting radially outwardly of the body for preventing the bush from moving through the hole.

The cylindrical body 21 has an inner periphery with a diameter greater than the outside diameter of the condensation tube 5a, an outer periphery smaller than the diameter of the through hole 7a and an axial length (front-to-rear length) greater than the depth (front-to-rear length) of the hole 7a.

The inner seal portions 22 and the outer seal portion 23 are each annular, and rectangular in longitudinal section and each have a length about 1/10 of the overall length of the body 21. The inner seal portions 22 have an inside diameter slightly smaller than the outside diameter of the condensation tube 5a. The outer seal portion 23 has an outside diameter slightly greater than the inside diameter of the through hole 7a. The seal portions 22, 23 elastically deform to come into intimate contact respectively with the outer peripheral surface of the condensation tube 5a and the partition inner peripheral surface defining the through hole 7a for reliable sealing.

In longitudinal section, the engaging portion 24 is in the form of a rectangular triangle having a small angle at its front end. The front end of the body 21 where the engaging portion 24 is formed has eight slits 26 extending longitudinally of the body and circumferentially spaced apart at a predetermined distance for permitting the engaging portion 24 to pass through the hole 7a easily.

In longitudinal section, the retaining portion 25 is in the form of a rectangular triangle having a small angle at its rear end. The rear end of the body 21 where the retaining portion 25 is formed has no slit but may of course be formed with longitudinal slits.

The distance between the rear end face of the engaging portion 24 and the front end face of the retaining portion 25 is approximately equal to the depth of the through hole 7a, with the result that when the engaging portion 24 is forcibly passed through the hole 7a, the engaging portion 24 comes into engagement with the front edge of the hole-defining inner peripheral surface of the partition 7 to prevent the bush 20 from slipping out of the hole rearward, while the retaining portion 25 comes into contact with the rear edge of the hole-defining inner peripheral surface, preventing the bush 20 from forwardly slipping out of the hole 7a.

When the sealing bush 20 is forcibly fitted into the hole 7a of the partition 7, the engaging portion 24 is diametrically diminished owing to the presence of the slits 26, with the outer seal portion 23 elastically deformed, so that the bush 20 can be fitted in easily. The bush 20 as fitted in is prevented from moving longitudinally thereof by the engaging portion 24 and the retaining portion 25, while the outer seal portion 23 effectively seals off the joint between the bush 20 and the partition 7. When the condensation tube 5a is thereafter inserted through the bush 20, the inner seal portions 22 elastically deform, facilitating the insertion of the tube 5a and effectively sealing off the joint between the bush 20 and the tube 5a to hold the tube 5a to the partition 7 fluid-tightly.

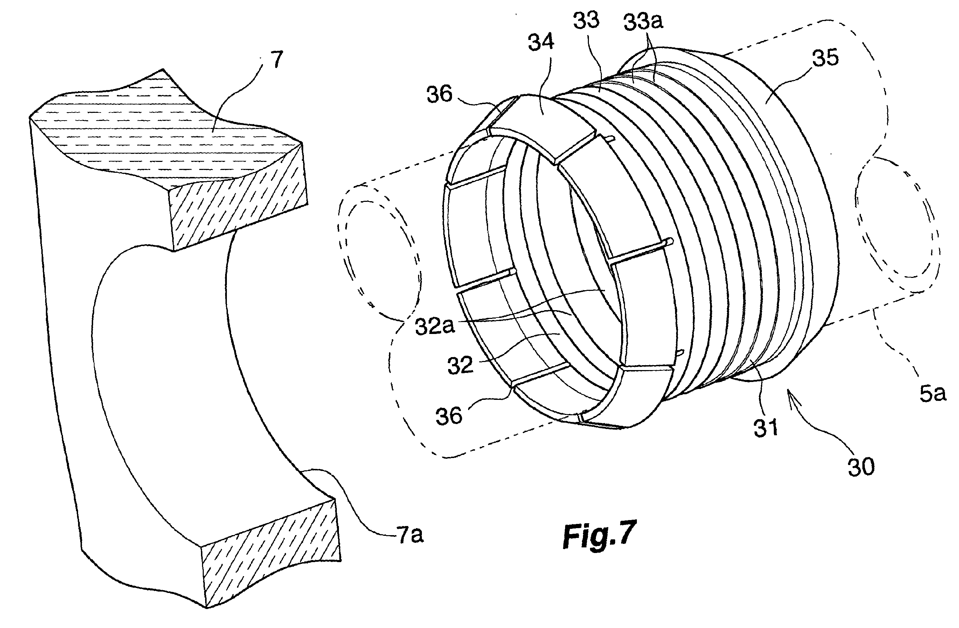

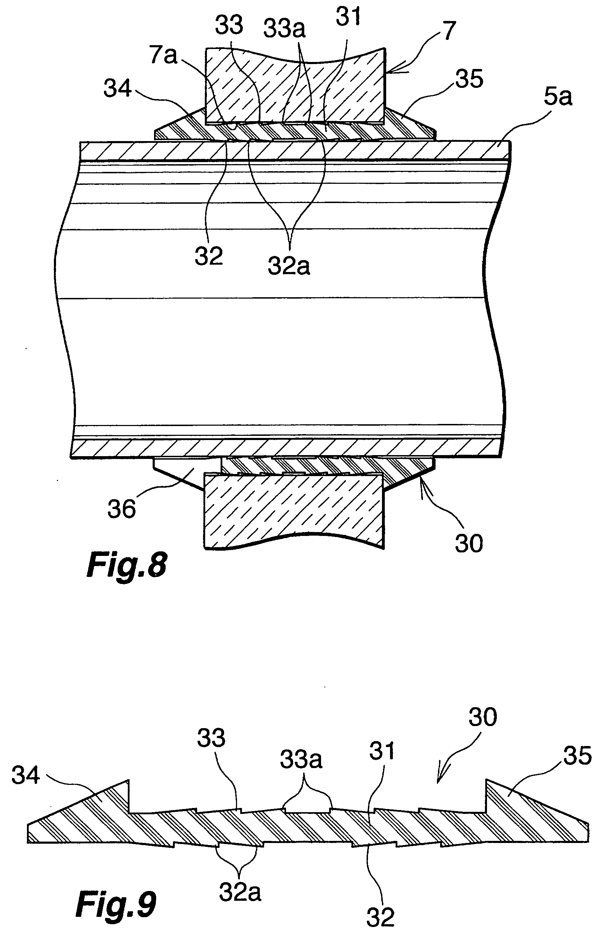

FIGS. 7 to 9 show a second embodiment of sealing bush for the tube inserted through the partition. As shown in these drawings, the sealing bush 30 of the second embodiment comprises a cylindrical body 31, an inner seal portion 32 formed on the inner peripheral surface of the body 31 and fittable around the condensation tube 5a in intimate contact therewith, an outer seal portion 33 formed on the outer peripheral surface of the body 31 and fittable to the inner peripheral surface of the partition 7 defining the through hole 7a in intimate contact therewith, an engaging portion 34 formed on the outer peripheral surface of the body 31 at its front end and projecting radially outwardly of the body for preventing the bush 30 from reversely slipping out of the hole 7a, the engaging portion 34 being forcibly movable through the through hole 7a and engageable with the front edge of the hole-defining inner peripheral surface of the partition 7 after being moved through the hole 7a, and a retaining portion 35 formed on the outer peripheral surface of the body 31 at its rear end and projecting radially outwardly of the body for preventing the bush 30 from moving through the hole. The body 31 is provided in its front end portion with eight longitudinal slits 36 for permitting the engaging portion 34 to pass through the through hole 7a easily.

According to the present embodiment, the inner seal portion 32 and the outer seal portion 33 each have six teeth 32a or 33a and are saw-toothed in section. In section, the three of the teeth toward the front are each in the form of a rectangular triangle having a small angle at its front end, while the other three teeth toward the rear are each in the form of a rectangular triangle in section, with a small angle at its rear end. The teeth 32a of the inner seal portion 32 have an inside diameter slightly smaller than the outside diameter of the condensation tube 5a. The teeth 33a of the outer seal portion 33 have an outside diameter slightly greater than the inside diameter of the through hole 7a.

The second embodiment has the same shape as the first embodiment with respect to the body 31, engaging portion 34, retaining portion 35 and slits 36.

When the sealing bush 30 is forcibly fitted into the hole 7a of the partition 7, the engaging portion 34 is diametrically diminished owing to the presence of the slits 36, with the outer seal portion 33 elastically deformed, so that the bush 30 can be fitted in easily. The bush 30 as fitted in is prevented from moving longitudinally thereof by the engaging portion 34 and the retaining portion 35, while the outer seal portion 33 effectively seals off the joint between the bush 30 and the partition 7. When the condensation tube 5a is thereafter inserted through the bush 30, the inner seal portion 32 elastically deforms, facilitating the insertion of the tube 5a and effectively sealing off the joint between the bush 30 and the tube 5a to hold the tube 5a to the partition 7 fluid-tightly. With the bush 30 of the second embodiment, the inner seal portion 32 and the outer seal portion 33 are both serrated in section, consequently rendering the bush 30 fittable into the through hole 7a with a reduced force and the bush 30 as fitted in the hole 7a difficult to remove therefrom. Furthermore, the condensation tube 5a can be inserted through the bush 30 with a smaller force, and the tube 5a as inserted through the bush 30 will not slip off easily.

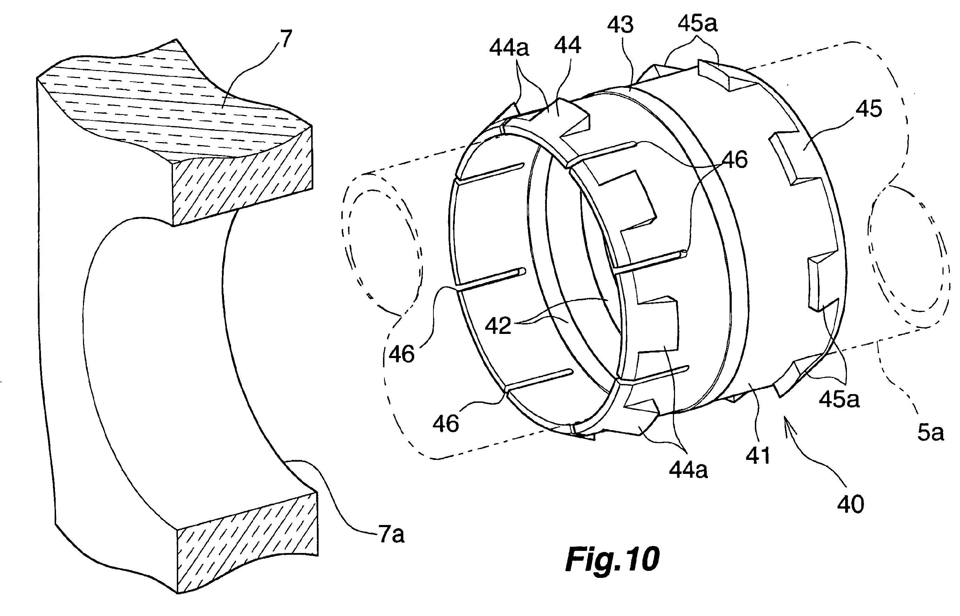

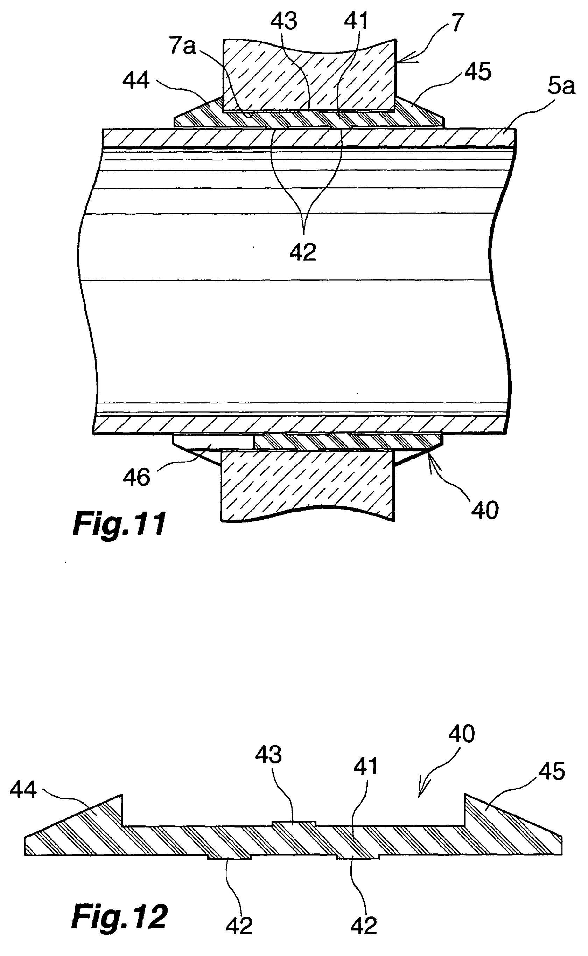

FIGS. 10 to 12 show a third embodiment of sealing bush for the tube inserted through the partition. As shown in these drawings, the sealing bush 40 of the third embodiment comprises a cylindrical body 41, inner seal portions 42 formed on the inner peripheral surface of the body 41 and fittable around the condensation tube 5a in intimate contact therewith, an outer seal portion 43 formed on the outer peripheral surface of the body 41 and fittable to the inner peripheral surface of the partition 7 defining the through hole 7a in intimate contact therewith, an engaging portion 44 formed on the outer peripheral surface of the body 41 at its front end and projecting radially outwardly of the body for preventing the bush 40 from reversely slipping out of the hole 7a, the engaging portion 44 being forcibly movable through the through hole 7a and engageable with the front edge of the hole-defining inner peripheral surface of the partition 7 after being moved through the hole 7a, and a retaining portion 45 formed on the outer peripheral surface of the body 31 at its rear end and projecting radially outwardly of the body for preventing the bush 40 from moving through the hole. The body 41 is provided in its front end portion with eight longitudinal slits 46 for permitting the engaging portion 44 to pass through the through hole 7a easily.

According to this embodiment, the engaging portion 44 and the retaining portion 45 each comprise eight projections 44a or 45a which are arranged at a predetermined spacing circumferentially of the body 41. In section, the projections 44a (45a) are each in the form of a triangle tapered toward the front (rear) end thereof. The slit 46 is formed at the midportion between each pair of adjacent projections 44a of the engaging portion 44.

The third embodiment has the same shape as the first embodiment with respect to the body 41, inner seal portions 42 and outer seal portion 43.

When the sealing bush 40 is forcibly fitted into the hole 7a of the partition 7, the engaging portion 44 is diametrically diminished owing to the presence of the slits 46, with the outer seal portion 43 elastically deformed, so that the bush 40 can be fitted in easily. The bush 40 as fitted in is prevented from moving longitudinally thereof by the engaging portion 44 and the retaining portion 45, while the outer seal portion 43 effectively seals off the joint between the bush 40 and the partition 7. When the condensation tube 5a is thereafter inserted through the bush 40, the inner seal portions 42 elastically deform, facilitating the insertion of the tube 5a and effectively sealing off the joint between the bush 40 and the tube 5a to hold the tube 5a to the partition 7 fluid-tightly. With the bush 40 of the third embodiment, the engaging portion 44 comprises the projections 44a, consequently rendering the bush 40 fittable into the through hole 7a with a reduced force.

While the sealing bushes 20, 30, 40 of the invention for the tubes extending through a partition are suited for use in multi-flash evaporators as described above, the bushes are usable also in various other apparatus such as condensers and heat exchangers for sealing off a clearance in a through hole formed in a partition around a condensation tube inserted through the hole.

### INDUSTRIAL APPLICABILITY

The present invention relates to sealing bushes for tubes inserted through partitions for use in multi-flash evaporators and the like, also relates to multi-flash evaporators incorporating such bushes, and is to make it possible that a clearance is sealed off with reduced time and labor less costly without the likelihood of corrosion while rendering the tube replaceable easily without permitting the bush to slip off or to become fixed to the tube.

## Claims

1. A sealing bush for a tube inserted through a hole formed in a partition for sealing a clearance in the hole around the tube, the sealing bush comprising a cylindrical body having an inner periphery with a diameter greater than the outside diameter of the tube, an outer periphery with a diameter smaller than the diameter of the hole and a front-to-rear length greater than the depth of the hole, an inner seal portion formed on the inner periphery of the body and fittable around the tube in intimate contact therewith, an outer seal portion formed on the outer periphery of the body and fittable to an inner peripheral surface of the partition defining the hole in intimate contact with the surface, an engaging portion formed on the outer periphery of the body at a front end thereof and projecting radially outwardly of the body for preventing the bush from reversely slipping out of the hole, the engaging portion being forcibly movable through the hole and engageable with a front edge of the hole-defining inner peripheral surface of the partition after being moved through the hole, and a retaining portion formed on the outer periphery of the body at a rear end thereof and projecting radially outwardly of the body, the retaining portion being movable into contact with a rear edge of the hole-defining inner peripheral surface of the partition after the engaging portion is forcibly moved through the hole to prevent the bush from moving through the hole.

2. A sealing bush according to claim 1 wherein the front end of the body is formed with slits extending longitudinally thereof for permitting the engaging portion to move through the hole easily.

3. A sealing bush according to claim 2 wherein the engaging portion is shaped in the form of a rectangular triangle having a small angle at a front end thereof in longitudinal section.

4. A sealing bush according to claim 1 which is made of a nonmetallic material.

5. A multi-flash evaporator comprising a multiplicity of housings elongated from front rearward and arranged side by side from left rightward, the housings having a pressure successively reducing from housing to housing from the left rightward, a bundle of condensation tubes provided in a widthwise central portion of each of the housings at an upper part thereof and extending longitudinally of the housing, a gutterlike condensate receptacle disposed below the tube bundle for receiving a condensate from the tube bundle, an evaporation chamber central partition positioned between a widthwise midportion of a bottom wall of the condensate receptacle and a widthwise midportion of a bottom wall of the housing and extending longitudinally of the housing for forming left and right evaporation stages in a lower portion of the housing, a condensation chamber central partition disposed at a lengthwise midportion of the tube bundle and having the condensation tubes inserted therethrough, a condensation chamber left front-half partition extending from an upper edge of a left side wall of the condensate receptacle to a widthwise midportion of a top wall of the housing around a front half of the tube bundle and covering an outer periphery of the front half of the tube bundle at a left side thereof for permitting vapor produced in the left evaporation stage to flow into the tube bundle only at a rear half thereof, and a condensation chamber right rear-half partition extending from an upper edge of a right side wall of the condensate receptacle to the widthwise midportion of the top wall of the housing around the rear half of the tube bundle and covering an outer periphery of the rear half of the tube bundle at a right side thereof for permitting vapor produced in the right evaporation stage to flow into the tube bundle only at the front half thereof, so that sea water admitted into the housing at the left end is caused to flow into all the other housings successively through orifices and flashed for desalination, the condensation chamber central partition being formed with holes having a diameter greater than the outside diameter of the condensation tubes, a sealing bush according to claim 4 being fitted in each of the holes around the condensation tube inserted through the hole.

6. A multi-flash evaporator according to claim 5 wherein the front end of the bush body is formed with slits extending longitudinally thereof for permitting the engaging portion to move through the hole easily.

7. A multi-flash evaporator according to claim 6 wherein the engaging portion of the bush is shaped in the form of a rectangular triangle having a small angle at a front end thereof in longitudinal section.
